(19) **Europäisches Patentamt / European Patent Office / Office européen des brevets**

(11) **EP 4 786 653 A1**

(12) **EUROPEAN PATENT APPLICATION**
published in accordance with Art. 153(4) EPC

(43) Date of publication:
05.08.2026 Bulletin 2026/32

(21) Application number: 24871424.8

(22) Date of filing: 28.06.2024

(51) International Patent Classification (IPC):
$C25B\ 3/11^{(2021.01)}$    $C25B\ 1/042^{(2021.01)}$
$C25B\ 9/00^{(2021.01)}$    $C25B\ 9/23^{(2021.01)}$
$C25B\ 15/02^{(2021.01)}$    $C25B\ 15/08^{(2006.01)}$
$C25B\ 15/023^{(2021.01)}$

(52) Cooperative Patent Classification (CPC):
C25B 1/042; C25B 3/11; C25B 9/00; C25B 9/23;
C25B 15/02; C25B 15/023; C25B 15/08;
Y02E 60/36

(86) International application number:
PCT/JP2024/023649

(87) International publication number:
WO 2025/069620 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.09.2023 JP 2023161782

(71) Applicants:
• ASAHI KASEI KABUSHIKI KAISHA
Tokyo 100-0006 (JP)
• NATIONAL UNIVERSITY CORPORATION
YOKOHAMA NATIONAL UNIVERSITY
Yokohama-shi
Kanagawa 240-8501 (JP)

• De Nora Permelec Ltd
Fujisawa-shi, Kanagawa 252-0816 (JP)

(72) Inventors:
• MITSUSHIMA, Shigenori
Yokohama-shi, Kanagawa 240-8501 (JP)
• KURODA, Yoshiyuki
Yokohama-shi, Kanagawa 240-8501 (JP)
• KATO, Masaaki
Fujisawa-shi, Kanagawa 252-0816 (JP)
• KANADA, Yuka
Tokyo 100-0006 (JP)

(74) Representative: Strehl & Partner mbB
Maximilianstrasse 54
80538 München (DE)

(54) **ELECTROLYSIS SYSTEM**

(57) Provided is an electrolysis system in which current efficiency of an electrolytic hydrogenation reaction is improved by restricting the amount of water migrating to a cathode while also supplying moisture to an electrolyte membrane and reducing resistance of the electrolyte membrane. Provided is an electrolysis system including an electrolyte membrane having proton conductivity, a cathode containing a catalyst for an electrochemical reaction involving protons, an anode containing a catalyst for oxidizing water to produce protons, and a structure that supplies water vapor to the anode, wherein the anode catalyst layer contains, in part thereof, an ionomer having proton conductivity, and a ratio of (002) diffraction peak intensity of carbon relative to (110) diffraction intensity of Ir oxide of the anode catalyst layer and ohmic resistance of the electrolysis system are within specific ranges.

**EP 4 786 653 A1**

*FIG. 1*

**Description**

TECHNICAL FIELD

The present disclosure relates to an electrolysis system that can be used to produce a hydrogenated product by producing oxygen and protons through electrochemical decomposition of water and using the produced protons to hydrogenate a hydrogenation subject by an electrochemical reaction.

BACKGROUND

In recent years, there has been demand for the spread of renewable energy obtained through sunlight, wind powder, hydropower, geothermal power generation, and so forth as new energy that can restrict the amount of carbon dioxide that is emitted in the process of generation as compared to energy obtained through thermal power generation. However, it is necessary to ease output variation of renewable energy, and particularly output variation over the medium-to-long term. Moreover, the large scale transportation of renewable energy is comparatively difficult. The conversion of electrical power obtained from renewable energy to chemical energy is effective for addressing this issue. A process by which electrical power is converted directly into chemical energy may be implemented by an electrochemical system. A secondary battery (also referred to as a rechargeable battery), which is one example of an electrochemical system, is a widely used device that converts electrical power to chemical energy and stores the chemical energy.

In one example of a promising electrochemical system that is based on renewable energy, a large scale photovoltaic power generation system or wind power generation system is installed at a suitable location somewhere on Earth, renewable energy obtained thereby is used to perform electrolytic hydrogen production, the hydrogen is converted to a hydrogen energy carrier that is suitable for transportation and is transported into a country, and then the energy is consumed in that country.

Organic hydrides (organic chemical hydrides) are attracting attention as one type of energy carrier. Examples of such organic hydrides include cyclic organic compounds such as cyclohexane, methylcyclohexane, and decalin. Organic hydrides are typically liquids at normal temperature and normal pressure, which makes them easy to handle. Moreover, organic hydrides are capable of electrochemical hydrogenation and chemical dehydrogenation. Therefore, the use of an organic hydride as an energy carrier can simplify transportation and storage as compared to when using liquid hydrogen. Particularly when a liquid having similar properties to petroleum is selected as the organic hydride, the organic hydride has excellent compatibility with a comparatively large scale energy supply system, which is advantageous in terms of enabling easy transportation up to the end of an energy supply system.

In a known conventional method of producing an organic hydride, hydrogen is produced through water electrolysis using renewable energy, and then a hydrogenation subject (dehydrogenated form of an organic hydride) is hydrogenated inside of a hydrogenation reactor to produce an organic hydride.

In contrast to this method, an electrolytic synthesis method can directly hydrogenate a hydrogenation subject, thereby enabling simplification of an organic hydride production process. The electrolytic synthesis method also has little loss of efficiency regardless of scale and has excellent responsiveness to initiation and suspension of operation of an organic hydride production apparatus. In relation to an organic hydride production technique such as described above, Patent Literature (PTL) 1, for example, discloses an organic hydride production apparatus including an anode that produces protons from water and a cathode that hydrogenates an organic compound having an unsaturated bond. In such organic hydride production apparatuses, since water or sulfuric acid is supplied to the anode, oxygen gas is produced at the anode, and the electrode becomes covered with produced bubbles and suffers from increased resistance. It is disclosed that to avoid covering of the electrode by bubbles in this manner while also promoting supply of liquid water or sulfuric acid to the anode, the use of a porous electrode having a reticulated or foam-like form is preferable. PTL 2, 3, and 4 each disclose an electrochemical reduction apparatus where a moisture supply means supplies water or humidified gas to an anode.

CITATION LIST

Patent Literature

PTL 1: JP 2018-197364 A
PTL 2: WO 2015/029366 A1
PTL 3: JP 2003-045449 A
PTL 4: JP 2012-72477 A

SUMMARY

(Technical Problem)

In the present technique, it is normally the case that liquid pure water or sulfuric acid is supplied into the anode compartment as disclosed in PTL 1, for example, but problems arise in terms that ion exchange of impurity cations in the electrolyte membrane acts as a cause of degradation, in terms that water associated with protons that migrate from the anode toward the cathode during electrolysis covers the surface of a catalyst component in the cathode and impedes access thereto of a hydrogenation subject such as toluene that is insoluble in water, thereby impeding the desired hydrogenation reaction at the cathode, reducing production efficiency of a target hydrogenated product such as an organic hydride, and causing superfluous hydrogen production through a side reaction, and in terms that the presence of impurity cations causes substitution of protons in the electrolyte membrane by cations, thereby leading to increased resistance of the electrolyte membrane and reducing electrical power efficiency. In particular, noticeable reduction of performance is a problem in an environment in which electrolysis has proceeded, and hydrogenation of toluene has progressed (i.e., in which there is low toluene content) because the frequency of contact of toluene onto the catalyst decreases, and the reaction efficiency declines.

In studies conducted in relation to the present disclosure, the inventors found that although supplying water vapor to the anode makes it possible to significantly reduce the amount of transferred water that migrates from the anode toward the cathode during electrolysis, this conversely leads to a problem that the amount of moisture held by the electrolyte membrane is insufficient, and the resistance of the electrolyte membrane significantly increases, thereby resulting in increased energy consumption and, depending on the conditions, the inability to continue electrolysis.

PTL 2 discloses a moisture supply means that supplies water or humidified gas to an anode, but the anode has a configuration in which a catalyst component is included on a porous substrate, and PTL 2 does not allude to problems arising when supplying a gas or a solution thereto.

PTL 3 discloses a means that supplies water or water vapor to an anode but does not allude to a problem of controlling the amount of associated water and inhibiting hydrogen production as a side reaction or a solution for this problem as is disclosed in the present application.

PTL 4 discloses a means that supplies water or water vapor to an anode but does not allude to a problem of controlling water vapor supplied to the anode and increased resistance due to condensation or a solution for this problem as is disclosed in the present application.

The present disclosure is made in light of the circumstances set forth above and an object thereof is to provide an electrolysis system in which current efficiency of an electrolytic hydrogenation reaction is improved by restricting the amount of moisture that migrates to a cathode in association with protons migrating from an anode toward the cathode during electrolysis while also supplying the required moisture to an electrolyte membrane and reducing resistance of the electrolyte membrane.

(Solution to Problem)

The inventors discovered that by supplying water to an anode as water vapor while controlling the humidity so as to remove ionic impurities from the water and inhibit the presence of excessive moisture in an electrolyte membrane, it is possible to restrict the amount of moisture that migrates to a cathode in association with protons by causing water to migrate from the cathode to the anode by diffusion, and it is also possible to improve current efficiency of an electrolytic hydrogenation reaction. In this manner, the inventors completed the present disclosure.

Specifically, the present disclosure is as set forth below.

[1] An electrolysis system comprising:

an electrolyte membrane having proton conductivity;
a cathode provided at one side of the electrolyte membrane and including a cathode catalyst layer that contains a cathode catalyst for an electrochemical reaction involving protons;
an anode provided at an opposite side to the one side of the electrolyte membrane and including an anode catalyst layer that contains an anode catalyst for oxidizing water to produce protons; and
a structure that supplies water vapor to the anode, wherein
the anode catalyst layer contains, in part thereof, an ionomer having proton conductivity,
a ratio of (002) diffraction intensity of carbon relative to (110) diffraction intensity of Ir oxide according to X-ray analysis of the anode catalyst layer is 0.10 or less, and
ohmic resistance measured at 0.6 A/cm$^2$ is 0.400 $\Omega$cm$^2$ or less.

[2] The electrolysis system according to [1], wherein an amount of transferred water from the anode to the cathode measured at 0.6 A/cm$^2$ is more than 0.00 mg/(cm$^2$·min) and not more than 10.0 mg/(cm$^2$·min).

[3] The electrolysis system according to [1] or [2], wherein an amount of transferred water from the anode to the cathode measured at 0.6 A/cm$^2$ is more than 0.00 mg/(cm$^2$·min) and not more than 5.0 mg/(cm$^2$·min).

[4] The electrolysis system according to any one of [1] to [3], further comprising a mechanism that prevents vapor condensation in the structure that supplies water vapor to the anode.

[5] The electrolysis system according to any one of [1] to [4], wherein the anode catalyst layer forms a porous layer.

[6] The electrolysis system according to any one of [1] to [5], wherein the water vapor that is supplied to the anode is water vapor in a gas that is inert in an electrochemical reaction.

[7] The electrolysis system according to any one of [1] to [5], wherein the water vapor that is supplied to the anode is water vapor in air.

[8] The electrolysis system according to any one of [1] to [6], wherein relative humidity at the anode of water vapor that is supplied through the structure that supplies water as water vapor can be controlled to an arbitrary value of 70% to 100%.

[9] The electrolysis system according to any one of [1] to [7], wherein relative humidity at the anode of water vapor that is supplied through the structure that supplies water as water vapor can be controlled to an arbitrary value of 70% to 100%.

[10] The electrolysis system according to any one of [1] to [9], further comprising a structure that supplies an aromatic compound to the cathode as a reaction substrate for obtaining a target product by a hydrogenation reaction.

[11] The electrolysis system according to [10], wherein the aromatic compound is toluene.

[12] The electrolysis system according to any one of [1] to [11], wherein the electrolyte membrane and the anode catalyst layer form a membrane-electrode assembly, and the anode catalyst in the anode catalyst layer has a mass per electrode area of not less than 0.1 mg/cm$^2$ and not more than 5.0 mg/cm$^2$.

[13] The electrolysis system according to any one of [1] to [12], wherein the electrolyte membrane and the cathode catalyst layer form a membrane-electrode assembly, and the cathode catalyst in the cathode catalyst layer has a mass per electrode area of not less than 0.1 mg/cm$^2$ and not more than 5.0 mg/cm$^2$.

[14] An operating method that is a method of operating the electrolysis system according to any one of [1] to [13], comprising controlling water vapor in the anode to a relative humidity that is an arbitrary value of not less than 70% and not more than 100%.

According to the present disclosure, by supplying water to an anode as water vapor while controlling humidity so as to remove ionic impurities from the water and inhibit the presence of an excessive amount of moisture in an electrolyte membrane, it possible to restrict the amount of moisture that migrates to a cathode in association with protons due to water migrating from the anode to the cathode by diffusion, to improve current efficiency of an electrolytic hydrogenation reaction, and to inhibit hydrogen production and increase current efficiency of a desired reaction.

(Advantageous Effect)

According to the present disclosure, an electrolysis system is provided in which current efficiency of an electrolytic hydrogenation reaction is improved by restricting the amount of moisture that migrates to a cathode in association with protons migrating from an anode toward the cathode during electrolysis while also supplying the required moisture to an electrolyte membrane and reducing resistance of the electrolyte membrane.

BRIEF DESCRIPTION OF THE DRAWINGS

In the accompanying drawings:

FIG. 1 is a schematic view illustrating an example of an electrolysis system basic unit that is a constituent of an electrolysis system according to the present disclosure;

FIG. 2 is a graph illustrating a relationship between current efficiency ($\varepsilon$) and current density (i) in examples and comparative examples;

FIG. 3 is a graph illustrating a relationship between voltage and current density (i) in examples and comparative examples;

FIG. 4 is a graph illustrating a relationship between an amount of transferred water that is discharged from a hydrogenated product outlet and current density (i) in examples and comparative examples; and

FIG. 5 is a graph illustrating a relationship between an amount of transferred water that is discharged from a hydrogenated product outlet and ohmic resistance in examples and comparative examples.

DETAILED DESCRIPTION

The following describes the present disclosure based on preferred embodiments with reference to the drawings. The embodiments are illustrative examples that do not limit the present disclosure, and it is not necessarily the case that all features or combinations thereof that are described in the embodiments are essential in the present disclosure. Elements of configuration, members, and processing in the drawings that are the same or equivalent are allotted the same reference sign and repeated description thereof is omitted as appropriate. Moreover, the scale and shape of each part in the drawings are set as convenient to facilitate description and should not be interpreted as limiting unless otherwise specified. Furthermore, when terms such as "first" and "second" are used in the present specification and claims, they are for distinguishing one configuration from another and do not express order or degree of importance unless otherwise specified.

(Electrolysis system)

An electrolysis system according to the present disclosure includes an electrolyte membrane having proton conductivity, a cathode provided at one side of the electrolyte membrane and including a cathode catalyst layer that contains a cathode catalyst for an electrochemical reaction involving protons, an anode provided at an opposite side to the one side of the electrolyte membrane and including an anode catalyst layer that contains an anode catalyst for oxidizing water to produce protons, and a structure that supplies water vapor to the anode. In the electrolysis system according to the present disclosure, an ionomer having proton conductivity is contained in a portion of the anode catalyst layer. Moreover, in the electrolysis system according to the present disclosure, a ratio of (002) diffraction intensity of carbon relative to (110) diffraction intensity of Ir oxide according to X-ray analysis of the anode catalyst layer is 0.10 or less.

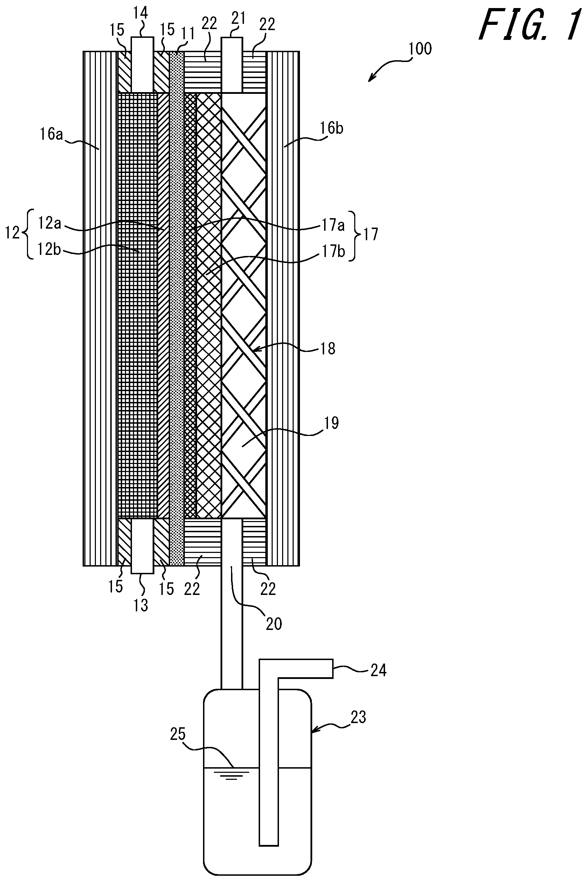

FIG. 1 illustrates an electrolysis system basic unit 100 that is a constituent of the electrolysis system according to the present disclosure. The electrolysis system according to the present disclosure can be used as an apparatus (for example, an organic hydride production apparatus or a hydrogen production apparatus) for producing a reduced product (for example, a hydrogenated product or hydrogen) by producing oxygen and protons through electrochemical decomposition of water and using the produced protons to perform reduction (for example, hydrogenation or proton reduction) of a reduction subject (for example, a hydrogenation subject or proton) through an electrochemical reaction. In the electrolysis system according to the present disclosure, moisture is supplied to the anode as water vapor, which makes it possible to restrict the amount of moisture that is present in the electrolyte membrane and the anode catalyst layer to the minimum amount required for electrolysis and also to restrict the amount of moisture that migrates to the cathode side since moisture that has migrated to the cathode as associated water returns to the anode side through the electrolyte membrane by diffusion. By restricting the amount of moisture that migrates to the cathode side, it is possible to inhibit impedance of catalyst access of a hydrogenation subject such as toluene that is water-insoluble due to the surface of the cathode catalyst being covered by moisture. Moreover, in a situation in which a hydrogenated product (organic hydride, etc.) is to be produced, production efficiency of the hydrogenated product (organic hydride, etc.) through a catalytic reaction improves, and factors causing reduction of electrical power efficiency, such as superfluous hydrogen production by a side reaction and increased electrolyte membrane resistance due to substitution of protons in the electrolyte membrane by cations as a result of the presence of cations, can be suppressed.

In FIG. 1, the electrolyte membrane having proton conductivity corresponds to a solid polymer electrolyte membrane 11. Features of the electrolyte membrane having proton conductivity are described below using the solid polymer electrolyte membrane 11 as an example. The solid polymer electrolyte membrane 11 is formed of a material having proton conductivity. The solid polymer electrolyte membrane 11 selectively conducts protons while conversely inhibiting mixing and diffusion of substances between a cathode 12 and an anode 17. The material having proton conductivity is preferably an ionomer. A cation exchange polymer can be used as the ionomer. For example, a polymer that includes an acidic group such as a sulfonic acid group or a carboxyl group or a polymer obtained through fluorination of such a polymer may be used, and specific examples thereof include perfluorosulfonic acid polymers such as NAFION® (NAFION is a registered trademark in Japan, other countries, or both) and FLEMION® (FLEMION is a registered trademark in Japan, other countries, or both) and (meth)acrylic acid-based fluoropolymers, of which, perfluorosulfonic acid polymers are most preferable. The thickness of the solid polymer electrolyte membrane 11 is not specifically limited but is preferably 5 $\mu$m or more, more preferably 10 $\mu$m or more, and even more preferably 20 $\mu$m or more, and is preferably 300 $\mu$m or less, more preferably 200 $\mu$m or less, and even more preferably 190 $\mu$m or less. Setting the thickness of the solid polymer electrolyte membrane 11 as 5 $\mu$m or more can ensure a barrier property of the solid polymer electrolyte membrane 11 and can more reliably inhibit the occurrence of cross leaking of a hydrogenation subject, a hydrogenated product (organic hydride), oxygen, and so forth. Moreover, setting the thickness of the solid polymer electrolyte membrane 11 as 300 $\mu$m or less can suppress excessive resistance to ion migration.

The area resistance (i.e., the resistance to ion migration per geometric area) of the solid polymer electrolyte membrane 11 after 2 hours of immersion in 25°C distilled water is not specifically limited but is preferably 2,000 m$\Omega \cdot$cm$^2$ or

less, more preferably 1,000 mΩ·cm$^2$ or less, and even more preferably 500 mΩ·cm$^2$ or less. Setting the area resistance of the solid polymer electrolyte membrane 11 as 2,000 mΩ·cm$^2$ or less makes it possible to more reliably avoid the concern of insufficient proton conductivity. In a case in which a cation exchange polymer is used as the ionomer, the ion exchange capacity (IEC) is not specifically limited but is preferably 0.7 meq/g to 2 meq/g, and more preferably 1 meq/g to 1.3 meq/g. By setting the ion exchange capacity of a cation exchange ionomer as 0.7 meq/g or more, it is possible to more reliably avoid the concern of insufficient ion conductivity. On the other hand, by setting this ion exchange capacity as 2 meq/g or less, it is possible to more reliably avoid the concern of solubility of the ionomer in an anolyte, hydrogenation subject, organic hydride, or the like increasing and strength of the solid polymer electrolyte membrane 11 becoming insufficient.

A reinforcing material that is formed of a corrosion resistant polymer such as a fluoropolymer (for example, PTFE (polytetrafluoroethylene) or VITON® (VITON is a registered trademark in Japan, other countries, or both; fluoroelastomer)) may be mixed into the solid polymer electrolyte membrane 11. The introduction of a reinforcing material can inhibit reduction of dimensional stability of the electrolyte membrane 11. Consequently, durability of the electrolyte membrane 11 can be improved. Moreover, crossover of a hydrogenation subject, an organic hydride, oxygen, etc. can be inhibited. The surface of the solid polymer electrolyte membrane 11 may be hydrophilized through covering by a specific inorganic material layer (for example, platinum, ruthenium, palladium, iridium, or an alloy including one or more thereof), for example. Hydrophilization can improve release of bubbles of produced oxygen and can improve performance.

The cathode 12 is provided at one side of the solid polymer electrolyte membrane 11. In the present embodiment, the cathode 12 is provided in contact with one main surface of the electrolyte membrane 11. A space in which the cathode 12 is housed is also referred to as a "cathode compartment". The cathode 12 contains a cathode catalyst for an electrochemical reaction involving protons. For example, the cathode 12 may have a structure in which a cathode catalyst layer 12a containing a cathode catalyst and a cathode substrate/porous flow path 12b are stacked. In this case, the cathode catalyst layer 12a is preferably provided in contact with one main surface of the electrolyte membrane 11. A main surface of the cathode substrate/porous flow path 12b at the opposite side to the cathode catalyst layer 12a may be in contact with a cathode side bipolar plate 16a.

The cathode catalyst layer 12a contains a cathode catalyst (reduction catalyst) for an electrochemical reaction involving protons. The electrochemical reaction involving protons may, for example, be a reaction in which a hydrogenation subject is hydrogenated by protons to produce a hydrogenated product (organic hydride). The cathode catalyst can, for example, be metal particles selected from the group consisting of Pt, Ru, Pd, Ir, and alloys including one or more thereof. A commercially available product may be used as the cathode catalyst, or a product that has been produced according to a commonly known method may be used as the cathode catalyst. Moreover, the cathode catalyst may be composed of a metal composition containing a first catalyst metal (precious metal) that includes one or more of Pt, Ru, Pd, and Ir and a second catalyst metal that is one or more selected from Cr, Mn, Fe, Co, Ni, Cu, Zn, Mo, Ru, Sn, W, Re, Pb, and Bi. In this case, the form of the metal composition may be an alloy of the first catalyst metal and the second catalyst metal, an intermetallic compound composed of the first catalyst metal and the second catalyst metal, or the like.

The cathode catalyst may be loaded on a catalyst support that is formed of an electron conducting material. By loading the cathode catalyst onto a catalyst support, it is possible to increase the surface area of the cathode catalyst layer 12a. Moreover, aggregation of the cathode catalyst can be inhibited. Porous fine particles can be used as the catalyst support. For example, an electron conducting material containing a porous carbon (mesoporous carbon, etc.), porous metal, or porous metal oxide as a main component or a porous metal compound such as a metal nitride, carbide, oxynitride, carbonitride, or partially oxidized carbonitride can be used.

The porous carbon may be carbon black such as Ketjenblack® (Ketjenblack is a registered trademark in Japan, other countries, or both), acetylene black, furnace black, or VULCAN® (VULCAN is a registered trademark in Japan, other countries, or both). The porous metal may be Pt black, Pd black, Pt metal precipitated in a fractal form, or the like, for example. Examples of metal elements that may be constituents of the porous metal oxide or other metal compound include Ti, Zr, Nb, Mo, Hf, Ta, and W. In a case in which a porous metal is used, the porous metal itself without metal particles loaded thereon may be used as the cathode catalyst. The average particle diameter of porous fine particles used as a catalyst support or a porous metal catalyst is preferably 0.01 μm to 1 μm.

The catalyst support with a cathode catalyst loaded thereon or the porous metal catalyst may be covered by an ionomer. This can improve ion conductivity inside of the cathode catalyst layer 12a. The ionomer can be any of those given as examples of ionomers that can be used as a material of the solid polymer electrolyte membrane 11, for example. The ionomer contained in the cathode catalyst layer 12a preferably partially covers the cathode catalyst. This makes it possible to efficiently supply the three components (hydrogenation subject, protons, and electrons) that are essential in the electrochemical reaction in the cathode catalyst layer 12a.

The thickness of the cathode catalyst layer 12a is preferably 1 μm to 100 μm, and more preferably 5 μm to 30 μm. Increasing the thickness of the cathode catalyst layer 12a not only increases resistance to migration of protons but also reduces diffusivity of a hydrogenation subject or organic hydride. Therefore, it is desirable for the thickness of the cathode catalyst layer 12a to be adjusted within the ranges set forth above.

The cathode catalyst layer 12a can be produced by the following method, for example. In this method, first mixing of a catalyst component powder, water, a solvent such as 1-propanol, and an ionomer (for example, NAFION® dispersion DE521 (produced by DuPont)) is performed. The additive amount of the ionomer is preferably an amount such that a ratio of the mass of the ionomer after drying and the mass of carbon in the catalyst component powder is 1:10 to 10:1. A solvent is optionally added to the resultant mixture as appropriate to produce a catalyst ink.

Next, the obtained catalyst ink is applied onto the cathode substrate/porous flow path 12b, is dried, and is subsequently hot pressed to bond the cathode catalyst layer 12a to the cathode substrate/porous flow path 12b. It is preferable that the application and drying described above are split into a plurality of repetitions and that hot pressing is performed thereafter. This makes it possible to obtain a more homogeneous cathode catalyst layer 12a. Through the steps described above, the cathode catalyst layer 12a can be produced. Note that the cathode catalyst layer 12a may be formed on the solid polymer electrolyte membrane 11. For example, by applying the catalyst ink onto one main surface of the solid polymer electrolyte membrane 11 using a bar coater, it is possible to obtain a composite of the cathode catalyst layer 12a and the solid polymer electrolyte membrane 11. Alternatively, the cathode catalyst layer 12a and the solid polymer electrolyte membrane 11 can be produced by spraying the catalyst ink onto one main surface of the solid polymer electrolyte membrane 11 by spray coating and then drying a solvent component in the catalyst ink. Further alternatively, the cathode catalyst layer 12a and the solid polymer electrolyte membrane 11 can be produced by spraying the catalyst ink onto a PTFE substrate and then performing transfer thereof onto the solid polymer electrolyte membrane 11 by pressing or the like under heated conditions, for example. Note that in these cases, the solid polymer electrolyte membrane 11 and the cathode catalyst layer 12a can be regarded as forming a membrane-electrode assembly. The catalyst ink may be applied such that the mass of the cathode catalyst (reduction catalyst; for example, a catalyst metal) per electrode area in the cathode catalyst layer 12a is preferably $0.1 \text{ mg/cm}^2$ or more, more preferably $0.2 \text{ mg/cm}^2$ or more, and even more preferably $0.3 \text{ mg/cm}^2$ or more, and is preferably $5.0 \text{ mg/cm}^2$ or less, more preferably $3.0 \text{ mg/cm}^2$ or less, and even more preferably $1.0 \text{ mg/cm}^2$ or less. Setting the mass of the cathode catalyst in the cathode catalyst layer 12a as not less than any of the lower limits set forth above reduces reaction resistance and contributes to improving electrolytic performance. Setting the mass of the cathode catalyst in the cathode catalyst layer 12a as not more than any of the upper limits set forth above can reduce the thickness of the catalyst layer and suppress resistance to migration of ions.

The cathode substrate/porous flow path 12b has a function of uniformly distributing, within a plane of the cathode catalyst layer 12a, a liquid hydrogenation subject that is supplied from the outside. A material that forms the cathode substrate/porous flow path 12b preferably has high affinity with the hydrogenation subject and the hydrogenated product (organic hydride). For example, a porous conductive substrate, a fiber sintered body, or the like may be used as the material forming the cathode substrate/porous flow path 12b. These materials are preferable because they have porosity that is suitable for supplying a liquid hydrogenation subject and removing a liquid hydrogenated product and by-products and can maintain sufficient electrical conductivity. The thickness of the cathode substrate/porous flow path 12b is selected through optimization of pressure loss in the cathode substrate/porous flow path 12b that accompanies supply of a liquid hydrogenation subject to the cathode catalyst layer 12a and removal of a liquid hydrogenated product and by-products and is preferably 10 μm to 5,000 μm.

More specific examples of materials that can form the cathode substrate/porous flow path 12b include carbon woven fabric (carbon cloth), carbon non-woven fabric, and carbon paper. Carbon cloth is a product obtained by bundling hundreds of fine carbon fibers of a few micrometers in diameter and then forming woven fabric using the bundle. Moreover, carbon paper is a product obtained by using carbon raw material fibers to obtain a thin film precursor by a paper making method and then sintering the precursor.

A hydrogenation subject inlet 13 and a hydrogenated subject outlet 14 connecting inside and outside of the cathode substrate/porous flow path 12b are disposed in the cathode substrate/porous flow path 12b.

The cathode 12 is preferably provided with the hydrogenation subject inlet 13 as a means of supplying the hydrogenation subject to the cathode 12 and with the hydrogenated product outlet 14 as a means of collecting the hydrogenated product that is produced at the cathode 12. For example, the hydrogenation subject inlet 13 may be disposed at the bottom of the cathode 12 and the hydrogenated product outlet 14 may be disposed vertically above the hydrogenation subject inlet 13 at the top of the cathode 12. The hydrogenation subject inlet 13 and the hydrogenated product outlet 14 are each connected to the cathode substrate/porous flow path 12b at one end. Moreover, the other end of either or both of the hydrogenation subject inlet 13 and the hydrogenated product outlet 14 may be connected to a catholyte storage tank (not illustrated) for storing a catholyte (general term for a hydrogenation subject-containing liquid that is supplied to the cathode 12 and a hydrogenated product-containing liquid that is discharged from the cathode 12). A catholyte transporting device (not illustrated) that is configured as any of various types of pumps such as a gear pump or a cylinder pump or as a gravitational flow-type device may be provided between the catholyte storage tank and the hydrogenation subject inlet 13 and/or hydrogenated product outlet 14. In a case in which both the hydrogenation subject inlet 13 and the hydrogenated product outlet 14 are connected to the catholyte storage tank, the catholyte circulates in the system while gradually undergoing hydrogenation through an electrochemical reduction reaction at the cathode 12.

The catholyte storage tank houses a liquid containing the hydrogenation subject that is to be hydrogenated through an electrochemical reduction reaction, a liquid containing the hydrogenated product that has been hydrogenated, or a circulating liquid that is gradually undergoing hydrogenation in the present electrolysis system. No specific limitations are placed on the combination of the dehydrogenated form of the organic hydride (hydrogenation subject) and the organic hydride (hydrogenated product) that is used in the present embodiment so long as it is a combination of organic compounds that enables addition/elimination of hydrogen by reversibly undergoing a hydrogenation reaction/dehydrogenation reaction. Moreover, a combination in which the hydrogenation subject and the hydrogenated product are liquids is preferable, and an acetone-isopropanol system, a benzoquinone-hydroquinone system, an aromatic hydrocarbon-hydrogenated aromatic hydrocarbon system, or the like, for example, can be widely used. An aromatic hydrocarbon compound that may be used as the dehydrogenated form of the organic hydride is a compound that includes at least one aromatic ring and may, for example, be benzene, an alkylbenzene, or the like. The term alkylbenzene encompasses compounds such as toluene and xylene, for example, where 1 to 4 hydrogen atoms of the aromatic ring have been replaced by a linear alkyl group or branched alkyl group having a carbon number of 1 or 2. These compounds may be used individually or in combination. The aromatic hydrocarbon compound is preferably at least one of toluene and benzene. Note that a nitrogen-containing heterocyclic aromatic compound such as pyridine, pyrimidine, or pyrazine can also be used as the dehydrogenated form. The organic hydride is a product resulting from hydrogenation of the dehydrogenated form described above, and examples thereof include methylcyclohexane, dimethylcyclohexane, and piperidine.

The dehydrogenated form of the organic hydride, which in other words is the hydrogenation subject, is preferably a liquid at normal temperature. Moreover, in a case in which a mixture of a plurality of types of aromatic hydrocarbon compounds and/or nitrogen-containing heterocyclic aromatic compounds described above is used, the mixture of these compounds should be a liquid. When the hydrogenation subject is a liquid at normal temperature, the hydrogenation subject can be supplied to the cathode 12 while in a liquid state without processing such as heating or pressurization. This makes it possible to simplify the configuration of the electrolysis system.

In a case in which hydrogen is to be produced rather than a liquid hydrogenated product, a means from the catholyte storage tank to the hydrogenation subject inlet 13 and a means for the hydrogenated product outlet 14 are not required. In particular, in a situation in which the aim is to transport energy by a ship or vehicle, an aromatic hydrocarbon-hydrogenated aromatic hydrocarbon system, of which a toluene-methylcyclohexane system is a representative example, is preferable from a viewpoint of transportability, toxicity, safety, preservation stability, and so forth and also from a viewpoint of energy conversion efficiency, such as the amount of hydrogen that can be transported per volume or mass, the ease of hydrogenation and dehydrogenation reactions, and the lack of a significantly large change of Gibbs free energy. The hydrogenation subject may be supplied to the cathode 12 in that form (i.e., 100%) or may be supplied to the cathode 12 as a solution where the hydrogenation subject is dissolved in a solvent (for example, a typical organic solvent such as cyclohexane or methylcyclohexane may be used, and an organic solvent without a double bond is preferable because of weak adsorption strength and low susceptibility to reduction). In the case of a solution, the concentration of the hydrogenation subject may be 1% vol/vol to 100% vol/vol, for example.

Cathode side spacers 15 are preferably provided in order to seal the bottom and top of the cathode 12 and protect the hydrogenation subject inlet 13 and the hydrogenated product outlet 14. The cathode side spacers 15 may, for example, be provided in close contact with the cathode 12 at the bottom and top of the cathode 12 such as to surround the hydrogenation subject inlet 13 and the hydrogenated product outlet 14. The cathode side spacers 15 also serve as sealing materials for preventing leakage of organic material including the hydrogenation subject and the hydrogenated product to outside of the cathode substrate/porous flow path 12b and are preferably electrically insulating. A material that forms the cathode side spacers 15 may be a corrosion resistant polymer such as a fluoropolymer (for example, PTFE (polytetrafluoroethylene) or VITON® (fluoroelastomer)).

The cathode side bipolar plate 16a may be disposed in contact with the cathode substrate/porous flow path 12b. In the present embodiment, the cathode side bipolar plate 16a is stacked on a main surface at the opposite side of the cathode substrate/porous flow path 12b to the cathode catalyst layer 12a. The cathode side bipolar plate 16a has electron conductivity and also functions as a power supply plate. A material that forms the cathode side bipolar plate 16a may be a metal such as SUS or Ti, for example.

The anode 17 is provided at the other side of the solid polymer electrolyte membrane 11. In the present embodiment, since the cathode 12 is provided in contact with one main surface of the solid polymer electrolyte membrane 11, the anode 17 is provided at a main surface at the opposite side of the solid polymer electrolyte membrane 11. The anode 17 may be formed of a porous anode catalyst layer 17a or may be a structure in which an anode catalyst layer 17a and an anode substrate 17b are stacked, for example. The anode 17 may be provided between the solid polymer electrolyte membrane 11 and an anode flow path structure 18. In a case in which the anode 17 is formed of an anode catalyst layer 17a, the anode 17 can be provided with one main surface of the anode catalyst layer 17a in contact with the solid polymer electrolyte membrane 11 and the other main surface of the anode catalyst layer 17a in contact with the anode flow path structure 18. Note that in these cases, the solid polymer electrolyte membrane 11 and the anode catalyst layer 17a can be regarded as forming a membrane-electrode assembly. In a case in which the anode 17 has a structure in which an anode catalyst layer 17a and an anode substrate 17b are stacked, the anode catalyst layer 17a may be provided in contact with one main surface of the solid polymer electrolyte membrane 11, and a main surface at an opposite side of the anode substrate 17b to the anode catalyst layer 17a may be provided in contact with the anode flow path structure 18. At a main surface of the anode flow path structure 18 at an opposite side to the anode 17, an anode side bipolar plate 16b may be provided in contact with the anode flow path structure 18. A material that forms the anode side bipolar plate 16b may be any of the materials givens as examples of materials that may form the cathode side bipolar plate 16a, for example. In a case in which the electrolysis system according to the present disclosure is configured as a repeated structure having an electrolysis system basic unit 100 such as illustrated in FIG. 1 as a repeating unit, the anode side bipolar plate 16b also serves as a cathode side bipolar plate 16a of an electrolysis system basic unit that is adjacent at the anode side, with the exception of in an electrolysis system basic unit located at the end.

The anode catalyst layer 17a contains an anode catalyst (oxidation catalyst) for oxidizing water to produce protons. The reaction in which water is oxidized to produce protons may be a reaction in which water decomposes into oxygen and protons. The anode catalyst can be particles formed of an oxide of Ir or Ru or a complex oxide including at least one thereof, for example. A commercially available product may be used as the anode catalyst, or a product that has been produced according to a commonly known method may be used as the anode catalyst. The mass of the anode catalyst (oxidation catalyst; for example, a catalyst metal oxide) per electrode area in the anode catalyst layer 17a may be preferably $0.1 \text{ mg/cm}^2$ or more, more preferably $0.2 \text{ mg/cm}^2$ or more, and even more preferably $0.3 \text{ mg/cm}^2$ or more, and may be preferably $5.0 \text{ mg/cm}^2$ or less, more preferably $3.0 \text{ mg/cm}^2$ or less, and even more preferably $1.0 \text{ mg/cm}^2$ or less. Setting the mass of the anode catalyst in the anode catalyst layer 17a as not less than any of the lower limits set forth above reduces reaction resistance and contributes to improving electrolytic performance. Setting the mass of the anode catalyst in the anode catalyst layer 17a as not more than any of the upper limits set forth above can reduce the thickness of the catalyst layer and suppress resistance to migration of ions.

The anode catalyst may be loaded on a catalyst support. The catalyst support may be a carbon material or a non-carbon material but is preferably a non-carbon material. When a carbon material is present in the anode, oxidation of the carbon material and reduction of current efficiency are a concern. The carbon content in the anode catalyst layer 17a is preferably 30 wt% or less, more preferably 10 wt% or less, even more preferably 1 wt% or less, and most preferably roughly 0 wt%.

The level of carbon content in the anode catalyst layer 17a can be determined qualitatively based on the size of a ratio of diffraction intensity of carbon relative to diffraction intensity of Ir oxide measured by wide angle X-ray diffraction, for example. Specifically, this ratio can be determined as a ratio $(002)_C/(110)_{IrO2}$ of (002) diffraction intensity of carbon appearing around a diffraction angle of 26 deg relative to (110) diffraction intensity of Ir oxide appearing around a diffraction angle of 28 deg according to Cu K$\alpha$ radiation. In a case in which the two diffraction peaks overlap and cannot be clearly resolved, the ratio can be determined as a ratio $(10)_C/(200)_{IrO2}$ of (10) diffraction intensity of carbon appearing at around a diffraction angle of 42 deg to 43 deg relative to (200) diffraction intensity of Ir oxide appearing at around a diffraction angle of 39 deg. Preferable values for $(002)_C/(110)_{IrO2}$ and $(10)_C/(200)_{IrO2}$ are 0.1 or less and 0.2 or less, respectively, from a viewpoint of suppressing reduction of current efficiency.

The anode catalyst layer 17a contains, in part thereof, an ionomer having proton conductivity. In the present embodiment, "an ionomer is contained" means that an ionomer is present in pores of the above-described porous layer, and may, for example, mean "covered by an ionomer". This can improve ion conductivity inside of the anode catalyst layer 17a. The ionomer can be any of those givens as examples of ionomers that can be used as a material of the solid polymer electrolyte membrane 11, for example. The ionomer contained in the anode catalyst layer 17a preferably partially covers the anode catalyst. Through this configuration, water required for the electrochemical reaction in the anode catalyst layer 17a can be supplied to the reaction field, and protons, electrons, and oxygen can be discharged from the reaction field.

The type of ionomer that is present in the anode catalyst layer 17a can be identified by a commonly known method such as micro-Fourier-transform infrared spectroscopy and solid 19F NMR or analysis by X-ray photoelectron spectroscopy (XPS).

The mass fraction of the ionomer present in the anode catalyst layer 17a is 1 wt% or more, preferably 5 wt% or more, and preferably 10 wt% or more from a viewpoint of trapping moisture supplied to the anode and improving proton conductivity of the electrolyte membrane. Moreover, this mass fraction is preferably 50 wt% or less, more preferably 40 wt% or less, and even more preferably 30 wt% or less from a viewpoint of maintaining a good catalytic reaction and reducing ion resistance. The mass fraction of the ionomer present in the anode catalyst layer can be measured by scanning electron microscope-energy dispersive X-ray fluorescence analysis (SEM-EDX), for example. Measurement can be performed using an SU8010 produced by Hitachi High-Technologies Corporation as a scanning electron microscope and an EMAX Evolution produced by Horiba, Ltd. in EDX, and by setting the accelerating voltage as 10 kV and the magnification as 1k. Target elements, C, O, F, S, and Ir are measured at an arbitrary location in the anode catalyst layer, and when an ionomer is present in the anode catalyst layer, element peaks are observed for all target elements. The proportion of the ionomer in the anode catalyst layer measured by EDX can be measured as the ratio of mass% of a peak of F element relative to mass% of a peak of Ir element. From a viewpoint of trapping water and improving proton conductivity of the electrolyte membrane, the ratio is preferably 0.01 or more, more preferably 0.03 or more and even more preferably 0.05 or more, and from a viewpoint of maintaining a good catalytic reaction and reducing ion resistance, the ratio is preferably 1.00 or less, more preferably 0.80 or less, and even more preferably 0.70 or less.

The thickness of the anode catalyst layer 17a is preferably 1 μm to 100 μm, and more preferably 5 μm to 30 μm. Increasing the thickness of the anode catalyst layer 17a not only increases resistance to migration of protons but also reduces diffusivity of water and oxygen. Therefore, it is desirable for the thickness of the anode catalyst layer 17a to be adjusted within the ranges set forth above.

A ratio of (002) diffraction intensity of carbon relative to (110) diffraction intensity of Ir oxide in the anode catalyst layer 17a is required to be 0.10 or less. It is preferable that this ratio is 0.05 or less, and more preferable that a (002) diffraction peak of carbon is not detected (i.e., that the ratio of

(002) diffraction intensity of carbon relative to (110) diffraction intensity of Ir oxide is roughly 0). The size of the ratio of (002) diffraction intensity of carbon relative to (110) diffraction intensity of Ir oxide in the anode catalyst layer 17a reflects the level of carbon content in the anode catalyst layer. For example, in a case in which a (002) diffraction peak of carbon is not detected (i.e., the ratio of (002) diffraction intensity of carbon relative to (110) diffraction intensity of Ir oxide is roughly 0), this reflects that the carbon content in the anode catalyst layer 17a is roughly 0 wt%. As a result of the ratio of (002) diffraction intensity of carbon relative to (110) diffraction intensity of Ir oxide in the anode catalyst layer 17a being not more than the upper limit set forth above, consumption of current by oxidation of carbon can be suppressed.

The anode catalyst layer 17a may form a porous layer. In a case in which the anode catalyst layer 17a forms a porous layer, the anode catalyst layer 17a may contain the ionomer having proton conductivity in a portion of pores of the porous layer. The porosity, etc. of the porous layer that can be formed by the anode catalyst layer 17a can be analyzed by the following method, for example.

The porosity ($V_{p,CL}$) of an anode catalyst layer 17a formed on a PTFE sheet or of an anode catalyst layer 17a in a membrane-electrode assembly is determined from the individual bulk density ($\rho_{bulk,CL}$) and true density ($\rho_{real,CL}$) of the anode catalyst layer 17a by the following formula.

$$V_{p,CL} = 1 - \rho_{bulk,CL}/\rho_{real,CL}$$

In measurement of these densities for an anode catalyst layer 17a formed on a PTFE sheet or an anode catalyst layer 17a in a membrane-electrode assembly, measurement is performed with respect to a laminate of a PTFE sheet and an anode catalyst layer 17a or a laminate of a solid polymer electrolyte membrane 11 and an anode catalyst layer 17a after removal of a cathode catalyst layer 12a.

The individual bulk density ($\rho_{bulk,CL}$) of the anode catalyst layer 17a is determined according to the following procedure. First, with respect to the mass of a laminate of a PTFE sheet and an anode catalyst layer 17a or a laminate of a solid polymer electrolyte membrane 11 and an anode catalyst layer 17a that has been cut to specific dimensions, the mass of a PTFE sheet or solid polymer electrolyte membrane 11 with the same dimensions is subtracted to thereby determine the individual mass of the anode catalyst layer 17a. Next, the individual thickness of the anode catalyst layer 17a is determined through cross-sectional observation using a scanning electron microscope. Finally, the individual mass of the anode catalyst layer 17a is divided by the dimensions and thickness thereof to calculate the individual bulk density ($\rho_{bulk,CL}$) of the anode catalyst layer 17a.

The individual true density ($\rho_{real,CL}$) of the anode catalyst layer 17a can be measured using a density meter (for example, a dry-type automatic density meter AccuPyc II 1345 (produced by Shimadzu Corporation)). First, with respect to the mass ($M_c$) of a laminate of a PTFE sheet and an anode catalyst layer 17a or a laminate of a solid polymer electrolyte membrane 11 and an anode catalyst layer 17a that has been cut to specific dimensions, the mass ($M_s$) of a PTFE sheet or solid polymer electrolyte membrane 11 with the same dimensions is subtracted to thereby determine the individual mass ($M_{CL}$) of the anode catalyst layer 17a. Next, the true density ($\rho_{real,c}$) of the laminate of the PTFE sheet and the anode catalyst layer 17a or the laminate of the solid polymer electrolyte membrane 11 and the anode catalyst layer 17a that has been cut out is measured using a density meter. The true density ($\rho_{real,s}$) of the PTFE sheet or the solid polymer electrolyte membrane 11 is then determined in the same manner. Finally, the individual true density ($\rho_{real,CL}$) of the anode catalyst layer 17a is calculated according to the following formula.

$$\rho_{real,CL} = M_{CL}/(M_c/\rho_{real,c} - M_s/\rho_{real,s})$$

An anode catalyst layer can also be confirmed to be porous by cutting a cross-section of the anode catalyst layer using a cryomicrotome, for example, and observing pores present in the cross-section using a scanning electron microscope.

The anode substrate 17b has a function of causing uniform diffusion of water to the anode catalyst layer 17a from the outside. A material that forms the anode substrate 17b is stable in a strongly oxidizing environment of the anode catalyst layer 17a and preferably has high electron conductivity because it is also responsible for conduction of electrons for the anode catalyst layer 17a and the anode flow path structure 18. The material forming the anode substrate 17b may, for example, be a porous conductive substrate or a fiber sintered body. These materials are preferable because they have porosity that is suitable for supplying or removing gas and liquid and can maintain sufficient electrical conductivity. The thickness of the anode substrate 17b is preferably 10 $\mu$m to 5,000 $\mu$m.

A more specific example of the material forming the anode substrate 17b is a product obtained by plating the surface of a titanium fiber sintered body or a titanium porous sintered body with an electron conductor such as Pt, Ir, or Ru in order to increase electron conductivity of the surface.

The electrolysis system according to the present disclosure further includes a structure that supplies water vapor to the anode (hereinafter, referred to simply as a "water vapor supply structure"). The water vapor that is supplied to the anode may be water vapor in an inert gas (i.e., a mixed gas of water vapor and an inert gas). The water vapor supply structure may, for example, include a means for producing a mixed gas of water vapor and an inert gas (corresponding to a humidifier main body 23 in FIG. 1), a means for causing the mixed gas to flow into the anode (corresponding to a humidified gas inlet 20 in FIG. 1), a space where the mixed gas is stored in the anode (corresponding to an anode compartment 19 in FIG. 1), and a means for discharging excess gas (corresponding to a humidified gas outlet 21 in FIG. 1). In order to form an area (anode compartment 19) where the mixed gas is stored in the anode, an anode flow path structure 18 may be provided between the anode 17 and the anode side bipolar plate 16b (i.e., between the anode catalyst layer 17a and the anode side bipolar plate 16b in a case in which the anode substrate 17b is not present and between the anode substrate 17b and the bipolar plate 16 in a case in which the anode substrate 17b is present). The anode flow path structure 18 is responsible for conducting electrons between the anode 17 and the anode side bipolar plate 16b and also forms a space of the anode compartment 19 for supplying gas containing supplied water 25 to the anode 17. The anode flow path structure 18 may, for example, be a tube-shaped structure formed by a framework made of a rigid conductive material (for example, a metal). The thickness of the anode flow path structure 18 is preferably 0.2 mm to 1.0 mm, and more preferably 0.4 mm to 0.7 mm. The humidified gas inlet 20 may, for example, be disposed such that one end is connected to the bottom of the anode compartment 19 and the other end is connected to the humidifier main body 23. The humidifier main body 23 is fed with a gas that is not involved in a reaction at the anode catalyst layer 17a from an inert gas inlet 24 and supplies the anode compartment 19 with supplied water 25 as vapor from the humidified gas inlet 20. Not only gases that are electrochemically inert such as nitrogen and noble gases (for example, helium, neon, argon, krypton, and xenon), but also air can be used as the inert gas. Air is preferable as the inert gas from a viewpoint of convenience. The humidified gas outlet 21 may be disposed vertically above the humidified gas inlet 20.

The water vapor supply structure may have a structure that prevents condensation of vapor. For example, a commonly known technique such as covering with a heat insulating material or heating by a heater can be adopted. In the electrolysis system according to the present disclosure, it is important to control the supply of moisture in a vapor state in order to perform electrolysis by supply the minimum amount of moisture necessary to the anode catalyst layer and the electrolyte membrane. By preventing condensation of supplied vapor, and thereby inhibiting loss of the supplied amount of moisture and controlling the amount of moisture that is supplied to the anode catalyst layer and the electrolyte membrane, it is possible to achieve high current efficiency by preventing an increase of resistance due to insufficient moisture and restricting the amount of transferred water. Moreover, preventing condensation also contributes to preventing flow path blocking inside of the anode compartment by condensed water and preventing localized swelling of the electrolyte membrane, and can improve durability during long-term use.

Anode side spacers 22 are preferably provided in order to seal the bottom and top of the anode 17 and protect the humidified gas inlet 20 and the humidified gas outlet 21. The anode side spacers 22 may, for example, be provided in close contact with the anode 17 at the bottom and top of the anode 17 such as to surround the humidified gas inlet 20 and the humidified gas outlet 21. The anode side spacers 22 also serve as sealing materials for preventing leakage of the mixed gas of water vapor and inert gas to outside of the anode compartment 19 and are preferably electrically insulating. A material that forms the anode side spacers 22 may be a corrosion resistant polymer such as a fluoropolymer (for example, PTFE (polytetrafluoroethylene)).

The electrolysis system according to the present disclosure can preferably control the relative humidity at a site in the anode where water vapor is supplied through the water vapor supply structure to an arbitrary value of preferably 70% to 100%, more preferably 80% to 100%, and even more preferably 90% to 100%. The relative humidity of water vapor can be controlled, for example, by adjusting the heating temperature of the humidifier main body 23 or the mixed amount of the inert gas and by optionally measuring the humidity at the anode and performing feedback.

In the electrolysis system according to the present disclosure, the ohmic resistance varies depending on conditions of the water vapor supplied to the anode since the amount of moisture in the electrolyte membrane also varies dependent thereon. For example, in a situation in which the supplied water vapor is insufficient, the amount of moisture in the electrolyte membrane is insufficient, which makes it possible to maintain a low amount of water transferred to the cathode but increases resistance of the electrolyte membrane. In a situation in which the supplied water vapor is excessive, the electrolyte membrane is sufficiently humidified, and resistance decreases, but condensation in the anode compartment or a route by which the water vapor is supplied becomes an issue. It is essential to control the resistance and amount of transferred water in the electrolysis system to within suitable ranges.

The ohmic resistance of the electrolysis system according to the present disclosure as measured at 0.6 A/cm$^2$ is preferably 0.400 $\Omega$cm$^2$ or less, preferably 0.350 $\Omega$cm$^2$ or less, preferably 0.300 $\Omega$cm$^2$ or less, and preferably 0.280 $\Omega$cm$^2$ or less from a viewpoint of lowering electrical potential and reducing energy consumption during electrolysis and from a viewpoint of reducing hydrogen production by a side reaction.

The ohmic resistance can be measured by stabilizing the operating temperature, feed rate to the cathode compartment, and supply rate to the anode compartment and subsequently measuring the ohmic resistance at 0.6 A/cm$^2$ by a method described in the EXAMPLES section. Specifically, an organic hydride production apparatus is connected to an electrochemical characteristic evaluation device (VSP300 produced by BioLogic Science Instruments SAS), the operating conditions of the organic hydride production apparatus are adjusted, these conditions are then held for 30 seconds at 0.60 A/cm$^2$, and then measurement of impedance is performed under the following conditions. The ohmic resistance ($\Omega \cdot$cm$^2$) is then calculated from the resultant Nyquist plot by multiplying an intersection point of the plot and a real axis at a high frequency side by the electrode area.

Current density: 0.60 A/cm$^2$
Amplitude: 40 mA
Frequency: 100.0 kHz to 10.0 mHz
Number of measurement points: 6/decade

Moreover, in the case of a single cell or stacked cells, the ohmic resistance can be determined be performing the following measurements after stabilization of the operating temperature, feed rate to the cathode, and supply rate to the anode compartment. The stabilized voltage after application of a current of 0.6 A/cm$^2$ is taken to be $V_1$, the voltage straight after adjustment of the current density to 0.7 A/cm$^2$ is taken to be $V_2$, and the change of voltage at this time is taken to be $\Delta V_{12}$. The stabilized voltage after application of a current of 0.6 A/cm$^2$ once again is taken to be $V_3$, the voltage straight after the current density is adjusted to 0.6 A/cm$^2$ is taken to be $V_4$, and the change of voltage at this time is taken to be $\Delta V_{34}$. The ohmic resistance can be determined from the following formula using the obtained values.

$$\text{Ohmic resistance } (\Omega \text{cm}^2) = \{\Delta V_{12} \text{ (V)}/0.1 \text{ (A/cm}^2) + \Delta V_{34} \text{ (V)}/0.1 \text{ (A/cm}^2)\}/2$$

Furthermore, the ohmic resistance at a target current density can be determined by appropriately changing the target current density being measured.

In the electrolysis system according to the present disclosure, the amount of transferred water from the anode to the cathode is preferably 10.0 mg/(cm$^2 \cdot$min) or less, preferably 5.0 mg/(cm$^2 \cdot$min) or less, preferably 3.0 mg/(cm$^2 \cdot$min) or less, and preferably 2.7 mg/(cm$^2 \cdot$min) or less from a viewpoint of reducing the amount of water that is present in the cathode catalyst layer and promoting supply of the hydrogenation subject to the catalyst to thereby improve current efficiency. The amount of transferred water is preferably more than 0.00 mg/(cm$^2 \cdot$min), preferably 0.01 mg/(cm$^2 \cdot$min) or more, and preferably 0.05 mg/(cm$^2 \cdot$min) or more from a viewpoint of maintaining the amount of moisture in the electrolyte membrane and reducing resistance thereof.

The amount of transferred water from the anode to the cathode in the electrolysis system according to the present disclosure as measured at 0.6 A/cm$^2$ after stabilization of the operating temperature, feeding rate to the cathode compartment, and supply rate to the anode compartment can be measured by a method described in the EXAMPLES section.

The temperature when the electrolysis system according to the present disclosure is used is not specifically limited so long as it is a temperature at which a hydrogenation reaction proceeds and at which supplied moisture maintains the state of water vapor of a specific relative humidity. For example, the temperature when the electrolysis system according to the present disclosure is used is preferably 50°C to 100°C, and more preferably 70°C to 90°C.

The electrolysis system according to the present disclosure may be configured as a single electrolysis system basic unit 100 such as illustrated in FIG. 1 or may be configured as a repeated structure having an electrolysis system basic unit 100 such as illustrated in FIG. 1 as a repeating unit. The system configured as a repeated structure may be an electrolysis system having a repeated structure in which electrolysis system basic units 100 are linked in series via bipolar plates (cathode side bipolar plate 16a and anode side bipolar plate 16b) such that, with the exception of an electrolysis system basic unit at an end, the anode side bipolar plate 16b also serves as the cathode side bipolar plate 16a of an electrolysis system basic unit that is adjacent at the anode side.

In an electrolysis system formed from a single electrolysis system basic unit 100 or through stacking of a plurality of electrolysis system basic units 100 as described above, operation is performed by controlling and inputting the hydrogenation subject, inert gas, supplied water 25, and DC electrical power. Accordingly, an electrical power controller and a drive controller that are not illustrated may be connected to the electrolysis system. The electrical power controller may, for example, be a DC/DC converter that converts output voltage of an electrical power supply to a specific voltage. A positive output terminal of the electrical power controller is connected to an anode side bipolar plate 16b that is at one end of the electrolysis system. A negative output terminal of the electrical power controller is connected to a cathode side bipolar plate 16a that is at an opposite end of the electrolysis system. Consequently, a specific voltage is applied between the anode 17 and the cathode 12 of the electrolysis system basic unit 100.

In the electrochemical system having the structure described above, reactions that occur in a case in which toluene (TL) is taken as one example of the hydrogenation subject are as follows. When toluene is used as the hydrogenation subject, the resultant organic hydride is methylcyclohexane (MCH).

<Electrode reaction at anode>

$$2H_2O \rightarrow O_2 + 4H^+ + 4e^-$$

<Electrode reaction at cathode>

$$TL + 6H^+ + 6e^- \rightarrow MCH$$

<Overall reaction>

$$2TL + 6H_2O \rightarrow 2MCH + 3O_2$$

In other words, the electrode reaction at the anode 17 and the electrode reaction at the cathode 12 proceed in parallel. Moreover, protons ($H^+$) that are produced through electrolysis of water at the anode 17 are supplied to the cathode 12 via the solid polymer electrolyte membrane 11. Protons that have been supplied to the cathode 12 are used to hydrogenate the hydrogenation subject at the cathode 12. In this manner, toluene is hydrogenated to produce methylcyclohexane. Accordingly, the electrolysis system according to the present embodiment makes it possible to perform electrolysis of water and a hydrogenation reaction of a hydrogenation subject in a single step. Electrode reactions also proceed in the same manner when a compound other than toluene is used as the hydrogenation subject.

(Production method of reduced product)

The electrolysis system according to the present disclosure can be used in a production method of a reduced product (for example, a hydrogenated product such as an organic hydride or hydrogen). A method of producing a reduced product according to the present disclosure includes:

(i) with respect to an electrolysis system that includes an electrolyte membrane having proton conductivity, a cathode provided at one side of the electrolyte membrane and containing a cathode catalyst for an electrochemical reaction involving protons, and an anode provided at an opposite side to the one side of the electrolyte membrane and containing an anode catalyst for oxidizing water to produce protons, and in which the anode catalyst forms a porous layer and an ionomer having proton conductivity is contained in a portion of pores of the porous layer, supplying water to the anode of the electrolysis system as water vapor in a gas that is inert in an electrochemical reaction of the anode;
(ii) supplying a hydrogenation subject serving as a precursor of a hydrogenated product (for example, an organic hydride) to the cathode of the electrolysis system in a case in which a hydrogenated product is to be produced;
(iii) passing electrical current through the electrolysis system; and
(iv) simultaneously performing (i) to (iii) so as to perform reduction (for example, hydrogenation or proton reduction) of a reduction subject (for example, a hydrogenation subject or proton) through an electrochemical reaction at the cathode of the electrolysis system and thereby produce a reduced product (for example, a hydrogenated product such as an organic hydride or hydrogen) of the reduction subject (for example, a hydrogenation subject or proton).

A method of producing an organic hydride according to the present disclosure can be performed by operating the electrolysis system according to the present disclosure set forth above. Each constituent element of the electrolysis system, combinations of a hydrogenation subject and a hydrogenated product that can be adopted, conditions of water vapor supply, and so forth can be those that were described for the electrolysis system according to the present disclosure.

The present disclosure is not limited to the embodiments described above, and modifications such as various design alterations can be made based on the knowledge of a person of ordinary skill in the art. Embodiments in which such modifications are made can also be encompassed by the scope of the present disclosure.

EXAMPLES

The following describes examples of the present disclosure, but these examples are merely illustrative examples for suitably describing the present disclosure and do not in any way limit the present disclosure.

(Production of membrane-anode assembly)

NAFION® dispersion DE521 (produced by DuPont) was added to a powder of IrOx catalyst ELC-0010 (produced by Tanaka Kikinzoku Kogyo K.K.) to produce a catalyst ink for an anode catalyst layer. The additive amount of the NAFION® dispersion was set such that the mass of NAFION after drying was 22 wt% relative to the mass of the catalyst.
In addition, NAFION® 117 (thickness: 183 $\mu$m; produced by DuPont) was prepared as a solid polymer electrolyte membrane. The obtained catalyst ink was spray coated onto one main surface of the solid polymer electrolyte membrane. The catalyst ink was applied such that the mass of Ir per electrode area was 1.0 mg/cm$^2$. Thereafter, the coating film was dried at 50°C and the solvent component in the catalyst ink was removed to form an anode formed of a porous anode catalyst layer on the surface of the solid polymer electrolyte membrane and obtain a membrane-anode assembly. Upon measurement of the ratio of (002) diffraction intensity of carbon relative to (110) diffraction intensity of Ir oxide by X-ray analysis of the anode catalyst layer, a (002) peak of carbon was not detected. The anode catalyst layer used in the examples did not have a carbon material used therein and had a carbon content of 0 wt%.
Upon measurement of At.% of elements C 1s, O 1s, F 1s, and S 2p in the anode catalyst layer by X-ray photoelectron spectroscopy (XPS) (ESCALAB250 produced by Thermo Fisher Scientific), these elements were, in order, 30.21 At.%, 8.21 At.%, 60.24 At.%, and 1.34 At.%. Measurement was performed with mono. Al K$\alpha$, 15 kV × 10 mA as an excitation source, an analysis size of 1 mm (ellipse), and a photoelectron capture angle of 0°. A survey scan was performed at 0 eV to 1,100 eV, and narrow scans were performed for C 1s, O 1s, F 1s, and S 2p. Derivation of relative element concentrations was performed using the following formula.

$$C_j\ (\%) = 100 \times (I_j/RSF_j)/\Sigma(I_j/RSF_j)$$

$C_j$: Relative element concentration (atomic%)
$I_j$: Area intensity (units: cps·eV) of each spectrum determined with background taken to be straight line
$RSF_j$: Relative sensitivity factor of Li 1s, O 1s, C 1s
(S 2p: 1.98, C 1s: 1.00, O 1s: 2.72, F 1s: 4.67)

(Production of cathode substrate/porous flow path)

Pt particles were loaded on carbon paper to produce a cathode substrate/porous flow path. The Pt particles contained in the cathode substrate/porous flow path fulfill a role of promoting a chemical reaction between hydrogen gas (by-product) and unreacted hydrogenation subject in a cathode. First, $H_2PtCl_6·6H_2O$ and 1-propanol were mixed to produce a mixed solution. The additive amount of $H_2PtCl_6·6H_2O$ was adjusted such that the amount of Pt loaded on the carbon paper was 0.02 mg/cm$^2$. Carbon paper GDL38BC (produced by SGL Carbon) was immersed in the obtained mixed solution. The carbon paper was subsequently completely dried under a room temperature atmosphere. Next, the carbon paper was immersed in 1 mg of NaBH$_4$ aqueous solution and was subjected to 2 hours of reduction treatment. After reduction treatment, the carbon paper was soaked and washed in pure water. The carbon paper was subsequently dried to obtain a cathode substrate/porous flow path.

(Production of cathode and production of cathode-membrane-anode assembly)

PtRu/C catalyst (TEC61E54 produced by Tanaka Kikinzoku Kogyo K.K.), pure water, 5 wt% NAFION® solution (produced by DuPont), and 1-propanol (produced by Wako) were loaded into a ball mill vessel and were mixed to produce a catalyst ink for a cathode catalyst layer. The mass ratio of NAFION/carbon in the catalyst ink was set as 0.8. This catalyst ink was applied onto carbon paper GDL38BC (produced by SGL Carbon) using a bar coater while adjusting the amount of precious metal (amount of PtRu) to 0.5 mg/cm$^2$. The catalyst ink was then heated at 50°C to dry a solvent component in the catalyst ink and obtain a cathode catalyst layer. The obtained cathode substrate/porous flow path, cathode catalyst layer, and membrane-anode assembly were stacked in this order in an orientation such that the cathode catalyst layer and a surface at the membrane side of the membrane-anode assembly (surface not coated with catalyst ink) were in contact, and then 2 minutes of hot pressing was performed at 120°C and 1 MPa. In this manner, a cathode-membrane-anode assembly was obtained.

(Production of organic hydride production apparatus)

A cathode side bipolar plate, an anode side bipolar plate, a cathode side spacer, an anode side spacer, and an anode flow path structure were prepared. The bipolar plates for the cathode and anode were plates made of titanium. The cathode side and anode side spacers were VITON®. The anode flow path structure was a Pt-plated Ti fiber sintered body. The thickness of the anode flow path structure was 0.55 mm. The various members were arranged such that the bipolar plate for the cathode, the cathode-membrane-anode assembly (laminate of the cathode substrate/porous flow path, the cathode catalyst layer, the electrolyte membrane, and the anode), the anode flow path structure, and the anode side bipolar plate were stacked in this order, such that the cathode side spacer was provided between the cathode side bipolar plate and the electrolyte membrane and was disposed in close contact with the cathode (cathode substrate/porous flow path and cathode catalyst layer), and such that the anode side spacer was provided between the electrolyte membrane and the anode side bipolar plate and was disposed in close contact with the anode (anode catalyst layer) and the anode flow path structure, and then these members were fastened using bolts and nuts. Through pressing of each of the layers through elastic strength of the anode flow path structure, a state in which the layers were in close contact with one another was created. The laminate of these members was assembled such that a pressure of 0.93 MPa was applied. In this manner, an organic hydride production apparatus (electrolyzer, electrolysis system) including each membrane-electrode assembly was obtained. The electrode effective area of the organic hydride production apparatus was taken to be 16 cm$^2$.

(Example 1)

Using the organic hydride production apparatus described above, a supply route for a hydrogenation subject was connected to a cathode side hydrogenation subject inlet. A discharge route for a hydrogenated product was connected to a cathode side hydrogenated product outlet. Moreover, a humidified air supply route was connected to an anode side humidified gas inlet. A humidified air discharge route was connected to an anode side humidified gas outlet. The anode side humidified air supply route was covered by a heat insulating material and was heated by a ribbon heater so as to prevent condensation caused by lowering of the temperature. 10% v/v (ratio relative to methylcyclohexane) toluene as an initial catholyte (hydrogenation subject-containing liquid) was caused to flow through the cathode compartment (space housing the cathode) at a flow rate of 5 mL/min. Moreover, humidified air of 80°C and 100% RH was caused to flow through the anode compartment at a flow rate of 0.8 L/min. The temperature of the electrolyzer was adjusted to 80°C using a cartridge heater.

[Table 1]

| Example/ Comparative Example No. | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|
| Anode side moisture supply means | Humidified air supply route | Humidified air supply route | Humidified air supply route | Humidified air supply route | Humidified air supply route | Humidified air supply route | Humidified air supply route | Humidified air supply route | Water supply route | Water supply route | Humidified air supply route | Water supply route |
| Humidification conditions of anode side supplied moisture (temperature conditions of supplied water) | 80°C 100% RH | 80°C 100% RH | 80°C 100% RH | 80°C 100% RH | 85°C 100% RH | 85°C 100% RH | 85°C 100% RH | 85°C 100% RH | 60°C liquid water | 80°C liquid water | 80°C 100% RH | 60°C liquid water (1 M $H_2SO_4$) |
| Anode side humidified air flow rate (supplied water flow rate) | 0.8 L/min | 1 L/min | 3 L/min | 5 L/min | 3 L/min | 5 L/min | 10 L/min | 15 L/min | 5 mL/min | 10 mL/min | 0.5 L/min | 5 mL/min |
| Catholyte (initial value) | 10% v/v toluene | 10% v/v toluene | 10% v/v toluene | 10% v/v toluene | 10% v/v toluene | 10% v/v toluene | 10% v/v toluene | 10% v/v toluene | 10% v/v toluene | 10% v/v toluene | 10% v/v toluene | 10% v/v toluene |
| Catholyte flow rate | 5 mL/min | 5 mL/min | 5 mL/min | 5 mL/min | 5 mL/min | 5 mL/min | 5 mL/min | 5 mL/min | 5 mL/min | 5 mL/min | 5 mL/min | 5 mL/min |
| Electrolyzer temperature | 80°C | 80°C | 80°C | 80°C | 80°C | 80°C | 80°C | 80°C | 80°C | 80°C | 80°C | 60°C |

EP 4 786 653 A1

17

(IV measurement)

The organic hydride production apparatus was connected to an electrochemical characteristic evaluation device (VSP300 produced by BioLogic Science Instruments SAS), and an electrolytic reduction reaction (electrolytic hydrogenation reaction) of toluene was performed under conditions indicated in Table 1. The current density was raised sequentially from 0.1 A/cm$^2$, and the electrical potential after holding of the current density for 30 seconds was measured. Measurement of the electrical potential at each current density was performed for a range where the electrical potential did not exceed 2.2 V. The electrical potential measured at 0.6 A/cm$^2$ is presented in Table 2.

(Current efficiency measurement)

A three-way stop cock was used to cause bifurcation before a discharge route of the cathode side hydrogenated product outlet, and a hydrogen collection tube made of PP and having a length of approximately 120 cm was attached. The catholyte was caused to flow in a state in which voltage was not applied so as to fill up the inside of the hydrogen collection tube. The weight of the solution in the hydrogen collection tube was weighed and was taken to be the initial weight. Next, electrolysis was initiated at a specific current density, the time at which collection of catholyte in the hydrogen collection tube filled with catholyte started was taken to be 0 (sec), and electrolysis was performed for a certain time (electrolysis time (sec)). During the above, produced hydrogen was collected while adjusting the electrolysis time such that the hydrogen collection tube was not completely filled with hydrogen. The weight of the solution in the hydrogen collection tube was weighed and was taken to be the post-electrolysis weight (g). The catholyte in the hydrogen collection tube was confirmed to be cooled to room temperature at this time.

The volume of produced hydrogen was calculated from the initial weight (g) and the post-electrolysis weight (g), and the current efficiency was determined according to the following formulae. It was assumed that no reaction other than an electrolytic hydrogenation reaction of toluene and a hydrogen production reaction occurred at the cathode at this time.

The catholyte density was taken to be 0.77915 (g/cm$^3$) in calculation.

F was taken to be 96485 (sec·A/mol) in calculation.

Hydrogen volume (cm$^3$) = (Initial weight (g) - Post-electrolysis weight (g))/Catholyte density (g/cm$^3$)

Amount of hydrogen (mol) = Hydrogen volume (cm$^3$) × 101.3 (kPa)/8.31 (kPa·L/K·mol)/Temperature (K) Current efficiency (%) = {1 - Amount of hydrogen (mol) × 2 × F (A·sec/mol)/[(Electrolysis current density (A/cm$^2$) × Effective electrode area (cm$^2$) × Electrolysis time (sec))] × 100

(Ohmic resistance measurement)

The organic hydride production apparatus was connected to an electrochemical characteristic evaluation device (VSP300 produced by BioLogic Science Instruments SAS), was adjusted to conditions indicated in Table 1, and was then held at 0.60 A/cm$^2$ for 30 seconds. Measurement of impedance was subsequently performed under the following conditions. The ohmic resistance ($\Omega$·cm$^2$) was then calculated from the resultant Nyquist plot by multiplying an intersection point of the plot and a real axis at a high frequency side by the electrode area.

Current density: 0.60 A/cm$^2$
Amplitude: 40 mA
Frequency: 100.0 kHz to 10.0 mHz
Number of measurement points: 6/decade

(Amount of transferred water measurement)

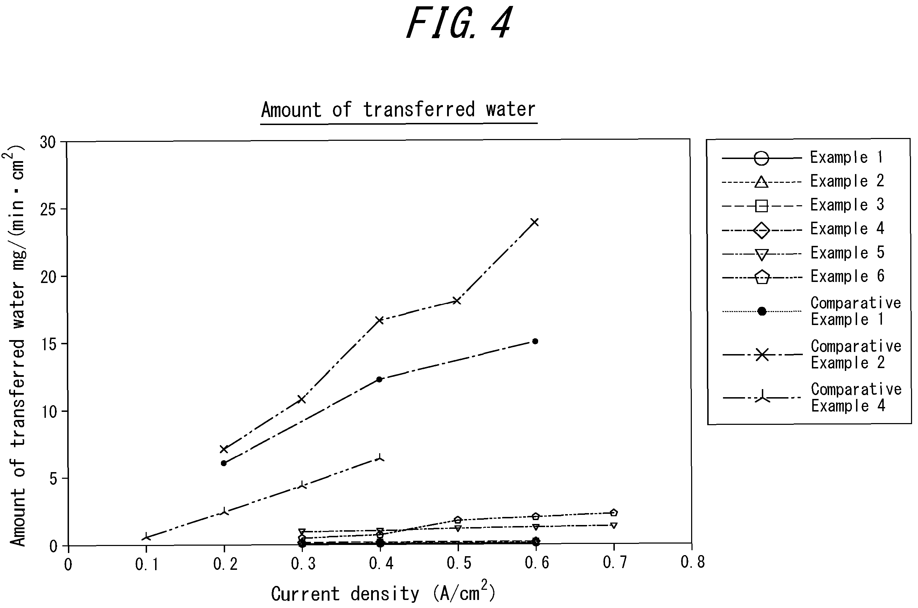

The organic hydride production apparatus was connected to an electrochemical characteristic evaluation device (VSP300 produced by BioLogic Science Instruments SAS), was adjusted to conditions indicated in Table 1, and then an electrolytic reduction reaction of toluene was performed at 0.60 A/cm$^2$. During the above, a Teflon® (Teflon is a registered trademark in Japan, other countries, or both) tube was connected to an outlet of the cathode compartment, and catholyte was collected in a bottle made of PP in order to collect transferred water that was discharged from the cathode compartment without this transferred water remaining on vessel walls. The time at which collection in the empty PP bottle began was taken to be 0 minutes, and liquid discharged from the cathode during 30 minutes of electrolysis was collected. The presence of transferred water that had separated at the bottom of the bottle was confirmed. A dropper made of PP was used to collect all of the transferred water in an empty test tube made of PP, the weight of which had been measured in advance, and the weight of the transferred water (mg) that had been collected was measured. Note that the electrolysis time was adjusted such that more than 1 g of transferred water could be collected to enable accurate measurement. At current densities other than 0.60 A/cm$^2$, the electrolysis time was extended, and the amount of transferred water was measured in the same manner. The results are presented in Table 2 and FIG. 4.

Amount of transferred water (mg/(cm$^2$·min)) = Collected transferred water (mg)/(Electrode effective area (cm$^2$) × Electrolysis time (min))

[Table 2]

| Example/Comparative Example No. | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|
| Amount of transferred water at 0.6 A/cm$^2$ (mg/(min cm$^2$)) | 0.08 | 0.13 | 0.21 | 0.22 | 1.27 | 2.02 | 2.68 | 4.08 | 15.03 | 23.85 | Not measurable | Not measurable (10.2)[*2] |
| Current density at 95% current efficiency (A/cm$^2$) | 0.29 | 0.30 | 0.41 | 0.55 | 0.63 | 0.68 | 0.64 | 0.57 | 0.19 | 0.21 | 0.27 | 0.22 |
| Cell voltage at 0.6 A/cm$^2$ (V) | 1.8 | 1.79 | 1.70 | 1.69 | 1.67 | 1.66 | 1.67 | 1.66 | 1.72 | 1.63 | >2 | > 2 |
| Ohmic resistance at 0.6 A/cm$^2$ Ωcm$^2$ | 0.400 | 0.352 | 0.278 | 0.269 | 0.256 | 0.256 | 0.256 | 0.256 | 0.287 | 0.205 | Not measurable (0.493)[*1] | Not measurable (0.498)[*1] |

*1 Value measured at 0.4 A/cm$^2$
*2 Reference value calculated from results that could be measured at 0.1 A/cm$^2$ to 0.4 A/cm$^2$

(Examples 2 to 8)

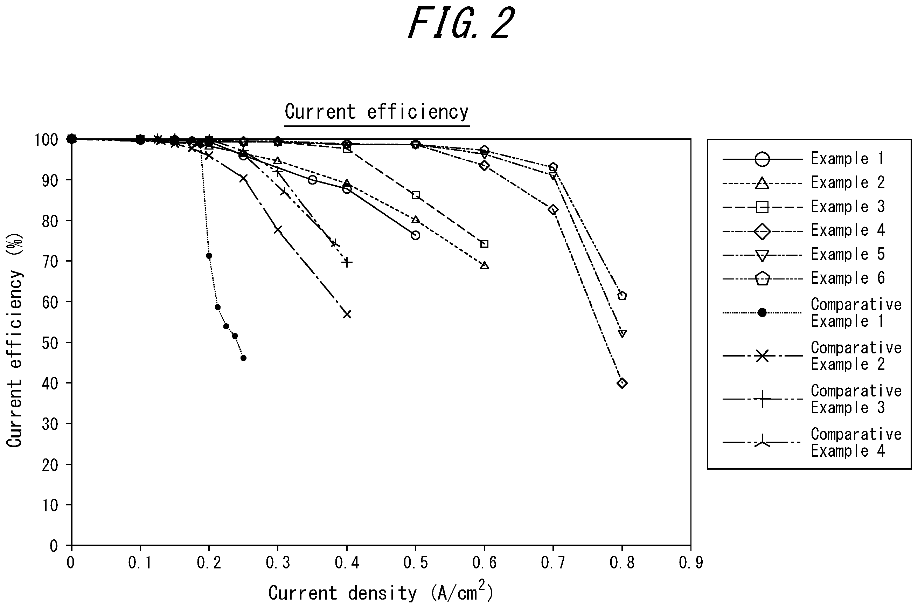

Evaluations of characteristics described above were performed in the same way as in Example 1 with the humidification conditions of supplied moisture at the anode side and the flow rate of humidified air at the anode side set as conditions indicated in Table 1. The results are presented in Table 2 and FIGS. 2 to 4.

In Example 7 and Example 8, a tiny amount of condensed water was discharged from the anode side outlet.

(Comparative Example 1)

Using the organic hydride production apparatus described above, a supply route for a hydrogenation subject was connected to the cathode side hydrogenation subject inlet. A discharge route for a hydrogenated product was connected to the cathode side hydrogenated product outlet. Moreover, a water supply route was connected to the anode side humidified gas inlet. A water discharge route was connected to the anode side humidified gas outlet. 10% v/v (ratio relative to methylcyclohexane) toluene as an initial catholyte (hydrogenation subject-containing liquid) was caused to flow through the cathode compartment at a flow rate of 5 mL/min. Water heated to 60°C was caused to flow through the anode compartment at 5 mL/min. The temperature of the electrolyzer was adjusted to 80°C using a cartridge heater. The results are presented in Table 2 and FIGS. 2 to 4.

(Comparative Example 2)

Comparative Example 2 was implemented in the same way as Comparative Example 1 with the exception that the water supplied to the anode compartment was heated to 80°C and was caused to flow at 10 mL/min. The results are presented in Table 2 and FIGS. 2 to 4.

(Comparative Example 3)

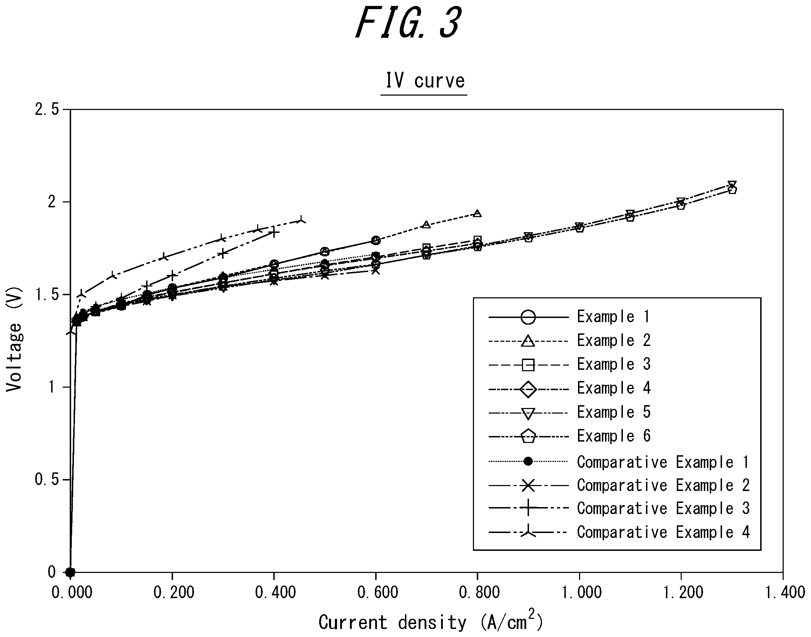

Comparative Example 3 was implemented in the same way as Example 1 with the exception that the flow rate of humidified air at the anode side was set as 0.5 L/min. Humidification of the electrolyte membrane was insufficient, the voltage was high, and measurement was only possible up to 0.4 A/cm$^2$. Therefore, the ohmic resistance measured at 0.4 A/cm$^2$ is presented in Table 2 as a reference value for ohmic resistance. The amount of transferred water could not be measured since the voltage was high and stable electrolysis was not possible, and also since the amount of transferred water was extremely small. The results are presented in Table 2 and FIGS. 2 and 3.

(Comparative Example 4)

Comparative Example 4 was implemented in the same way as Comparative Example 1 with the exception that 1 M dilute sulfuric acid aqueous solution heated to 60°C was used as water supplied to the anode compartment. The electrical potential was high, and measurement was only possible up to 0.4 A/cm$^2$. Therefore, the ohmic resistance measured at 0.4 A/cm$^2$ is presented in Table 2 as a reference value for ohmic resistance. Although the electrical potential was high, a large amount of transferred water was discharged, and thus the amount of transferred water was measured for 0.1 A/cm$^2$ to 0.4 A/cm$^2$. Since transferred water increases in proportion to current density, the amount of transferred water at 0.6 A/cm$^2$ that was predicted from the results at 0.1 A/cm$^2$ to 0.4 A/cm$^2$ is presented as a reference value in FIG. 2. The results are presented in Table 2 and FIGS. 2 to 4.

(Evaluation of relationship between anode side supply scheme and amount of transferred water)

FIG. 4 illustrates a relationship between the amount of transferred water that was discharged from the hydrogenated product outlet and the current density (i) (comparison of Examples 1 to 6 and Comparative Examples 1, 2, and 4). With a humidified air anode supply scheme, the amount of transferred water was confirmed to be reduced to 1/3 or less of that with a water anode supply scheme. This can be interpreted to be because, compared to a water anode supply scheme, a humidified air anode supply scheme ensures the amount of water that is used in an oxygen production reaction at the anode and in swelling of the solid polymer electrolyte membrane while also keeping the water supply as low as possible, thereby resulting in reduction of the amount water that is transferred to the cathode.

(Evaluation of relationship between anode side supply scheme and current efficiency)

FIG. 2 illustrates a relationship between current efficiency ($\varepsilon$) and current density (i). With regards to current efficiency, in contrast to the result of significant reduction of current efficiency that was obtained with a water anode supply scheme, reduction of current efficiency was confirmed to be significantly suppressed in the examples in which swelling of the electrolyte membrane was appropriately adjusted by a humidified air anode supply scheme. The main cause of reduction of current efficiency is transferred water that builds up in the cathode catalyst layer, thereby impeding diffusion of toluene to the cathode catalyst and causing the production of hydrogen. The effect of enhanced current efficiency with an anode supply scheme through humidified air is thought to be due to an effect of improving catalyst utilization through reduction of the amount of water that builds up in the cathode catalyst layer, which accompanies reduction of the amount of water that is transferred from the anode to the cathode.

(Evaluation of relationship between amount of transferred water and ohmic resistance)

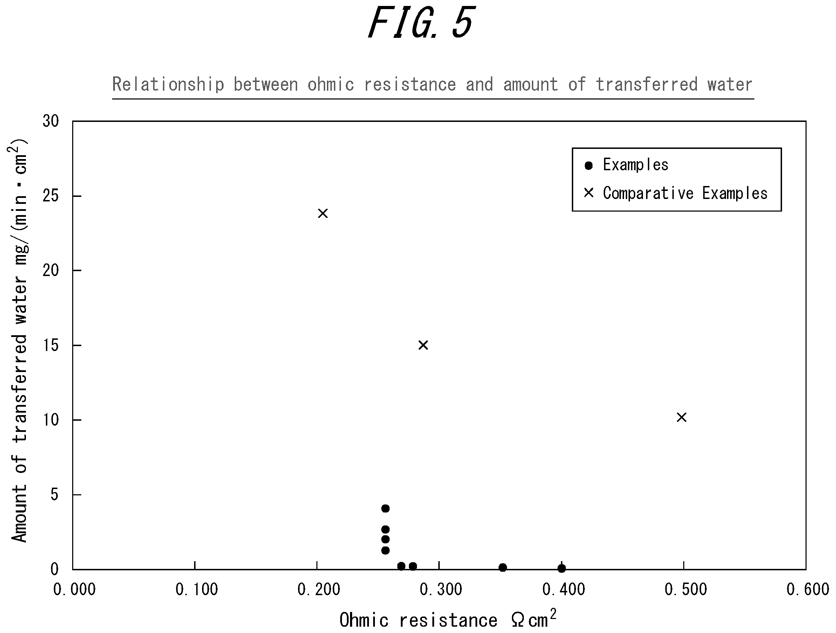

FIG. 5 illustrates a relationship between the amount of transferred water and ohmic resistance measured at 0.6 $A/cm^2$. In anode supply schemes using water and sulfuric acid aqueous solution, the amount of transferred water is of a high level. Although the amount of transferred water can be reduced to a certain extent by lowering the temperature or adding sulfuric acid, it is not possible to reach a range for the amount of transferred water where current efficiency is improved. With a humidified air anode supply scheme, the amount of transferred water can be significantly reduced as compared to a water supply scheme. Although ohmic resistance increases due to insufficient moisture in the electrolyte membrane in a situation in which the supplied amount of humidified air is insufficient, the ohmic resistance can be reduced by increasing the supplied amount.

INDUSTRIAL APPLICABILITY

According to the present disclosure, an electrolysis system is provided in which current efficiency of an electrolytic hydrogenation reaction is improved by restricting the amount of moisture that migrates to a cathode in association with protons migrating from an anode toward the cathode during electrolysis while also supplying the required moisture to an electrolyte membrane and reducing resistance of the electrolyte membrane.

REFERENCE SIGNS LIST

| 11  | solid polymer electrolyte membrane |
|-----|-------------------------------------|
| 12  | cathode |
| 12a | cathode catalyst layer |
| 12b | cathode substrate/porous flow path |
| 13  | hydrogenation subject inlet |
| 14  | hydrogenated product outlet |
| 15  | cathode side spacer |
| 16a | cathode side bipolar plate |
| 16b | anode side bipolar plate |
| 17  | anode |
| 17a | anode catalyst layer |
| 17b | anode substrate |
| 18  | anode flow path structure |
| 19  | anode compartment |
| 20  | humidified gas inlet |
| 21  | humidified gas outlet |
| 22  | anode side spacer |
| 23  | humidifier main body |
| 24  | inert gas inlet |
| 25  | supplied water |
| 100 | electrolysis system basic unit |

**Claims**

1.   An electrolysis system comprising:

an electrolyte membrane having proton conductivity;
a cathode provided at one side of the electrolyte membrane and including a cathode catalyst layer that contains a cathode catalyst for an electrochemical reaction involving protons;

an anode provided at an opposite side to the one side of the electrolyte membrane and including an anode catalyst layer that contains an anode catalyst for oxidizing water to produce protons; and

a structure that supplies water vapor to the anode, wherein

the anode catalyst layer contains, in part thereof, an ionomer having proton conductivity,

a ratio of (002) diffraction peak intensity of carbon relative to (110) diffraction intensity of Ir oxide according to X-ray analysis of the anode catalyst layer is 0.10 or less, and

ohmic resistance measured at 0.6 A/cm$^2$ is 0.400 $\Omega$cm$^2$ or less.

2. The electrolysis system according to claim 1, wherein an amount of transferred water from the anode to the cathode measured at 0.6 A/cm$^2$ is more than 0.00 mg/(cm$^2$·min) and not more than 10.0 mg/(cm$^2$·min).

3. The electrolysis system according to claim 1 or 2, wherein an amount of transferred water from the anode to the cathode measured at 0.6 A/cm$^2$ is more than 0.00 mg/(cm$^2$·min) and not more than 5.0 mg/(cm$^2$·min).

4. The electrolysis system according to claim 1 or 2, further comprising a mechanism that prevents vapor condensation in the structure that supplies water vapor to the anode.

5. The electrolysis system according to claim 1 or 2, wherein the anode catalyst layer forms a porous layer.

6. The electrolysis system according to claim 1 or 2, wherein the water vapor that is supplied to the anode is water vapor in a gas that is inert in an electrochemical reaction.

7. The electrolysis system according to claim 1 or 2, wherein the water vapor that is supplied to the anode is water vapor in air.

8. The electrolysis system according to claim 1 or 2, wherein relative humidity at the anode of water vapor that is supplied through the structure that supplies water as water vapor can be controlled to an arbitrary value of 70% to 100%.

9. The electrolysis system according to claim 6, wherein relative humidity at the anode of water vapor that is supplied through the structure that supplies water as water vapor can be controlled to an arbitrary value of 70% to 100%.

10. The electrolysis system according to claim 1 or 2, further comprising a structure that supplies an aromatic compound to the cathode as a reaction substrate for obtaining a target product by a hydrogenation reaction.

11. The electrolysis system according to claim 10, wherein the aromatic compound is toluene.

12. The electrolysis system according to claim 1 or 2, wherein the electrolyte membrane and the anode catalyst layer form a membrane-electrode assembly, and the anode catalyst in the anode catalyst layer has a mass per electrode area of not less than 0.1 mg/cm$^2$ and not more than 5.0 mg/cm$^2$.

13. The electrolysis system according to claim 1 or 2, wherein the electrolyte membrane and the cathode catalyst layer form a membrane-electrode assembly, and the cathode catalyst in the cathode catalyst layer has a mass per electrode area of not less than 0.1 mg/cm$^2$ and not more than 5.0 mg/cm$^2$.

14. An operating method that is a method of operating the electrolysis system according to claim 1 or 2, comprising controlling water vapor in the anode to a relative humidity that is an arbitrary value of not less than 70% and not more than 100%.

FIG. 1

FIG. 2

Current efficiency

## FIG. 3

<u>IV curve</u>

EP 4 786 653 A1

FIG. 4

# FIG. 5

Relationship between ohmic resistance and amount of transferred water

## INTERNATIONAL SEARCH REPORT

| International application No. |
|---|
| **PCT/JP2024/023649** |

| A. | CLASSIFICATION OF SUBJECT MATTER |
|---|---|

*C25B 3/11*(2021.01)i; *C25B 1/042*(2021.01)i; *C25B 9/00*(2021.01)i; *C25B 9/23*(2021.01)i; *C25B 15/02*(2021.01)i; *C25B 15/08*(2006.01)i; *C25B 15/023*(2021.01)i
FI:   C25B3/11; C25B1/042; C25B9/00 A; C25B9/00 G; C25B9/23; C25B15/02; C25B15/023; C25B15/08 302

According to International Patent Classification (IPC) or to both national classification and IPC

| B. | FIELDS SEARCHED |
|---|---|

Minimum documentation searched (classification system followed by classification symbols)

C25B3/11; C25B1/042; C25B9/00; C25B9/23; C25B15/02; C25B15/08; C25B15/023

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2011/122155 A1 (HITACHI, LTD.) 06 October 2011 (2011-10-06) paragraphs [0023]-[0030], [0036]-[0046], fig. 2-7 | 1-14 |
| Y | JP 2021-188085 A (ENEOS CORP.) 13 December 2021 (2021-12-13) paragraphs [0016]-[0022], [0074]-[0093] | 1-14 |
| Y | WO 2002/050338 A1 (SONY CORPORATION) 27 June 2002 (2002-06-27) page 13, line 26 to line 29 | 4 |
| A | JP 2012-072477 A (HITACHI, LTD.) 12 April 2012 (2012-04-12) paragraphs [0036], [0039]-[0057] | 1-14 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 July 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/023649**

| Patent document cited in search report | | | Publication date (day/month/year) | Patent family member(s) | Publication date (day/month/year) |
|---|---|---|---|---|---|
| WO | 2011/122155 | A1 | 06 October 2011 | (Family: none) | |
| JP | 2021-188085 | A | 13 December 2021 | (Family: none) | |
| WO | 2002/050338 | A1 | 27 June 2002 | US 2003/0116443 A1 paragraph [0099] EP 1344844 A1 KR 10-2002-0080429 A CN 1401016 A | |
| JP | 2012-072477 | A | 12 April 2012 | US 2014/0144774 A1 paragraphs [0042], [0045]-[0063] WO 2012/043086 A1 CN 103069051 A | |

Form PCT/ISA/210 (patent family annex) (July 2022)

**REFERENCES CITED IN THE DESCRIPTION**

**Patent documents cited in the description**

- JP 2018197364 A
- WO 2015029366 A1
- JP 2003045449 A
- JP 2012072477 A